# EUROPEAN PATENT SPECIFICATION

(11) **EP 0 938 841 B1**
(45) Date of publication and mention of the grant of the patent: **11.07.2001**
(21) Application number: 98830099.2
(22) Date of filing: 25.02.1998
(51) Int. Cl.: A01K 5/02

(54) **Automatic feed distribution device for cats and dogs**
Automatischer Futterverteiler für Hunde und Katzen
Distributeur d'alimentation automatique pour chiens et chats

(43) Date of publication of application: 01.09.1999
(73) Proprietor: Vittuari, Emanuele, 40033 Casalecchio di Reno (Bologna) (IT); Vittuari, Maria Rosa, 40033 Casalecchio di Reno (Bologna) (IT); Vittuari, Gabriele, 40033 Casalecchio di Reno (Bologna) (IT); Vittuari, Maurizio, 40033 Casalecchio di Reno (Bologna) (IT)
(72) Inventor: Vittuari, Emanuele, 40033 Casalecchio di Reno (Bologna) (IT); Vittuari, Maria Rosa, 40033 Casalecchio di Reno (Bologna) (IT); Vittuari, Gabriele, 40033 Casalecchio di Reno (Bologna) (IT); Vittuari, Maurizio, 40033 Casalecchio di Reno (Bologna) (IT)
(74) Representative: Sassatelli, Franco T., Dr.

(56) References cited:
- FR-A- 2 565 066
- FR-A- 2 623 688
- US-A- 5 299 529

## Description

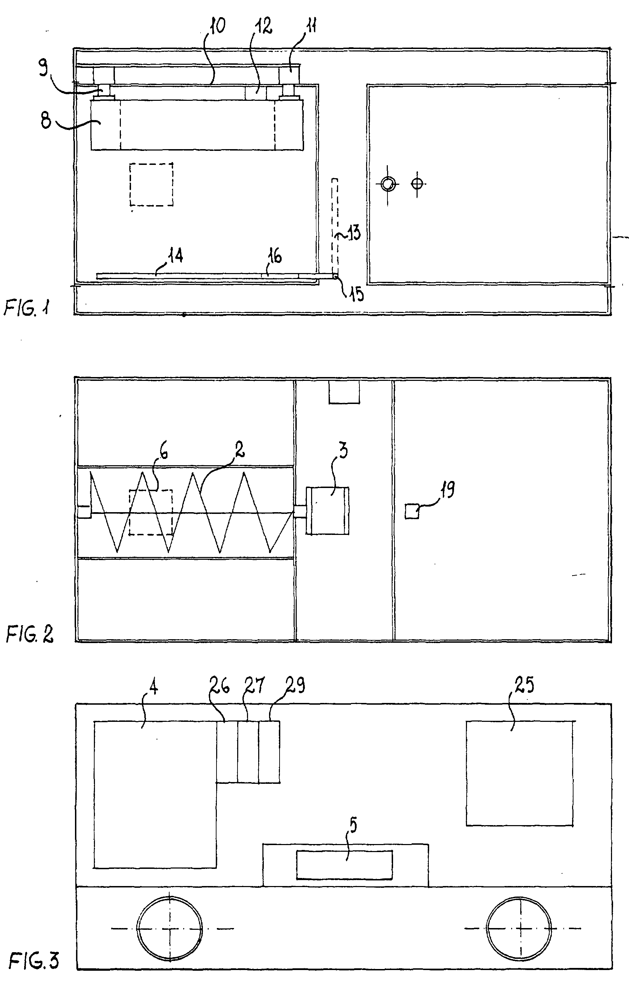

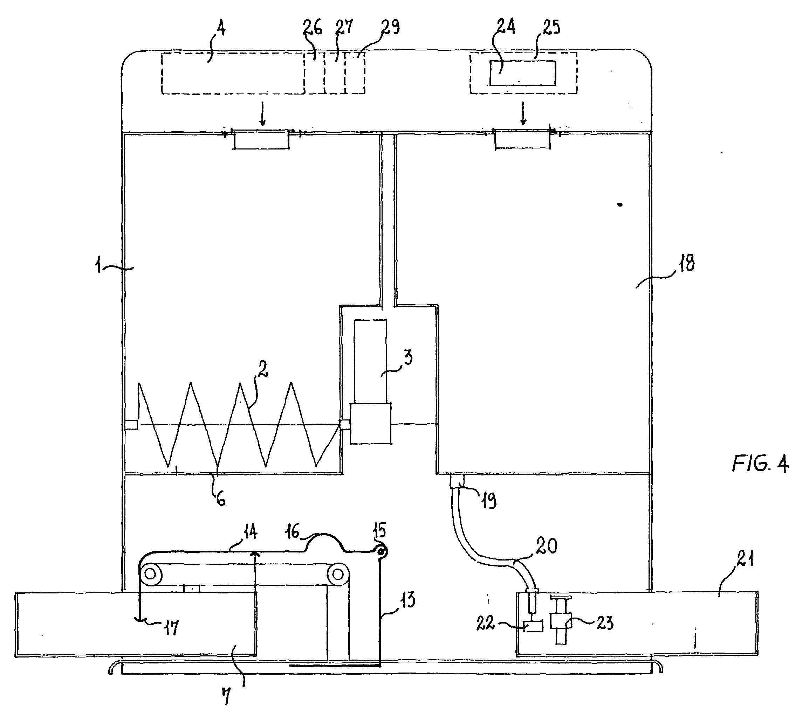

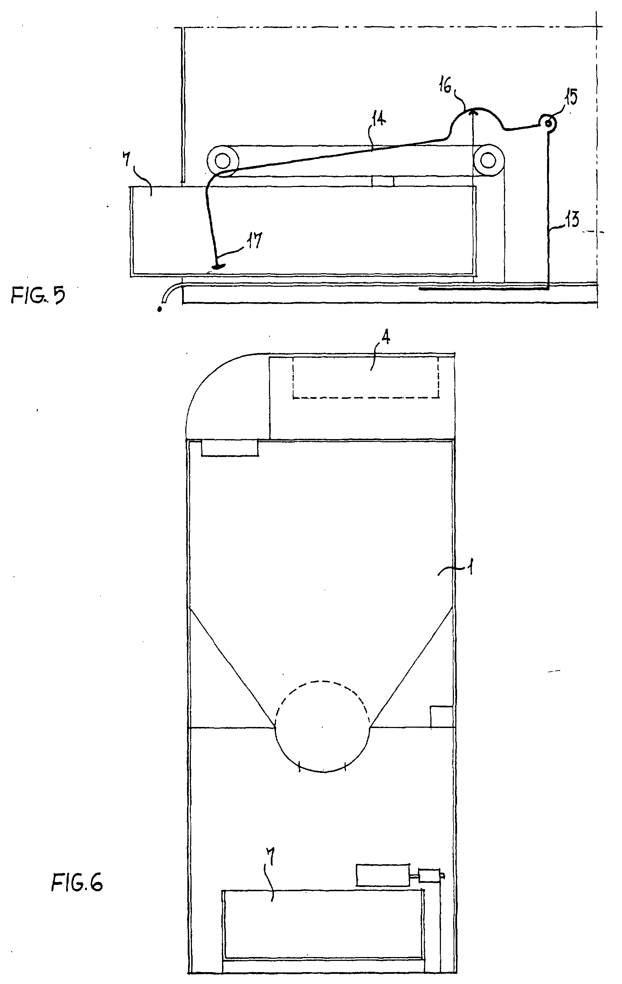

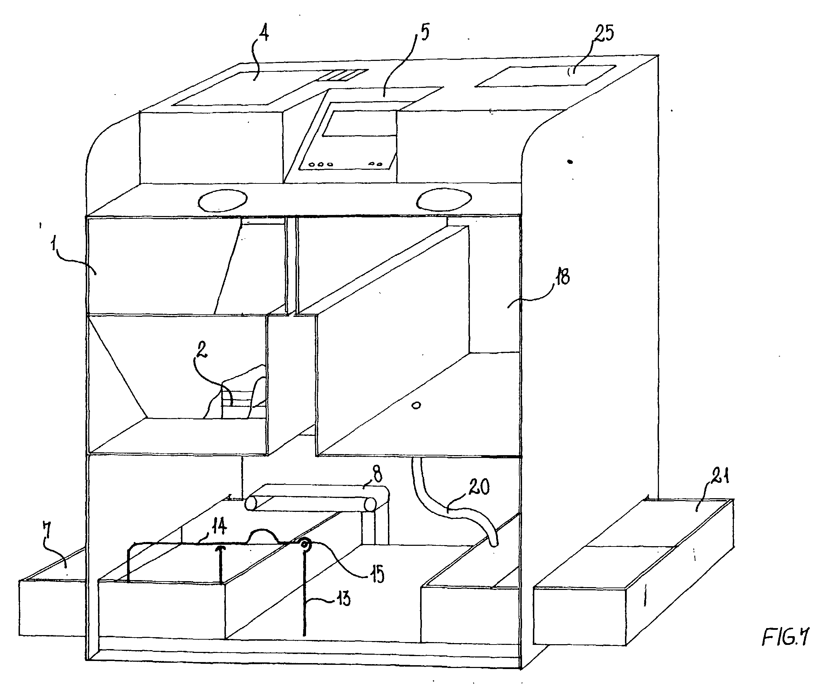

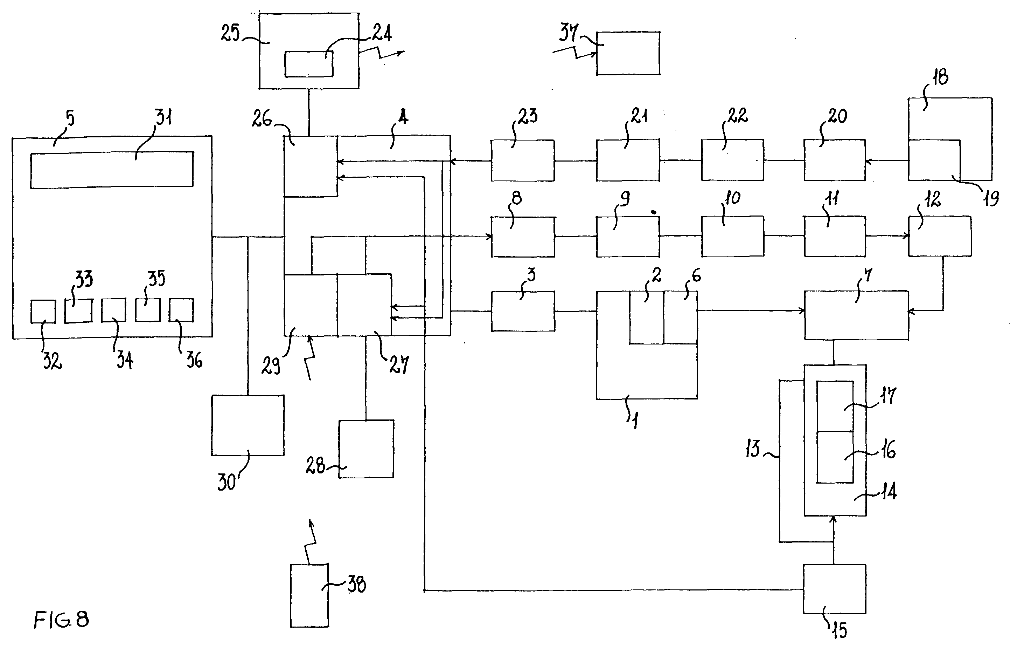

The invention refers to an automatic distribution unit to supply water and dispense anhydrous food in pellet to one or more family pets, in particular to cats and dogs that can be fed without requiring any human supervision by means of a card programmed accordingly on the operator's control panel. A gravity feed reservoir system, which discharges both foods and water into feeding and water troughs respectively, is already currently in use and ensures that the necessary feed and water quantity is constantly refilled by fall. There is also another system featuring a volume distributor controlled by a timer in such a way that animals are fed at present times, as described in the document US-A-5 299 529. This time-activated feed , distributor has the drawback of an approximate dosage owing to the lack of a direct proportionality between the nurner of revolutions of the volume proportioning distributor and its working time. The apparatus according the document FR-A-2 565 066 is known. A double bulkhead volume proportioning distributor for horses is also in use, this device is solenoid controlled and a feed quantity contained between the two bulkheads corresponds to the feed ration suppied everytime it is operated. This apparatus has the drawback that the solenoids, once activated, cannot be controlled any longer. Moreover, in order to fill the reservoir between the two bulk-heads it is necessary to use an industrial vibrator integral with the feeding silo, otherwise the anhydrous feed in pellet would obstruct the hopper. All the above stated devices, however, cannot verify whether any malfunction occurs during their working operations and in that event they cannot over come these failures in any way. For this reason they (comprising the FR-A-2 565 066 apparatus) operate as passive units and cannot replace the users' presence especially for long periods. The invented unit features a new advanced technique in the field with regard to passive mechanical operations through the use of a volumetric screw feeder with a horizontal axis which ensures regular precise feeding operations even if the average size of the anhydrous feed in pellet varies, thus the same volumetric feed dispenser can be used with all sizes of pellet. Such a precision is ensured by a special motor reducer having inside a sensing contact of each turn or fraction thereof. The invented unit has also the advantage that it can be place outdoors thanks to an original movement of the fodder-trough which will turn to an outside position ready for use only in presence of the animal which is to be fed to prevent that other animals, such as predators, or even other dogs, can eat the pet's meal as happens in the apparatus described in document FR-A-2 565 066. Moreover, an automatic water heater is featured to prevent that water freezes. Another original characteristic of the invented apparatus features that, as soon as the dosed meal is sent outside, the device interior gets tightly closed and cannot be reached by other animals, such as rats, nor by foreign bodies, such as a child's arm. Sustantially, the invented unit substitutes a man's physical presence completely by interacting at a distance with the operator through detailed information about the machine correct working operations and consequently ensuring that the animal to be fed is on the spot, at least during the meals, and it having its meal. The invented feed distributor features separate compartments to hold and dispense both the anhydrous feed in pellet and water. In the compartment containing the anhydrous Feed in pellet to be dispensed from a feeding reservoir 1, the dry feed in pellet reaches a volumetric screw feeder 2 by a gravitational fall, the said feeder is activated by a d.c. motor reducer 3, which is in turn operated by a microprocessor card 4 which can actaute the operator's preset functions through a software menu on the control board 5. Then, the anydrous food in pellet dispensed in this way falls through an opening 6 into a fodder-trough 7. The said fodder-trough is extended out of the apparatus by a translation system formed by a motor reducer 8 held and secured on a base 9. The said motor reducer 8 drags a toothed belt drive 10 revolving onto another toothed idler pulley 11. The toothed belt drive is integral with the fodder-trough by means of a blocking plate 12. The movement of the fodder-trough causes the rotation of the device which senses the presence of feed instantly as well as the emptying feeding reservoir 1, the said sensing device consists of a linear support 13 holding a rod 14 on which an angular potentiometer 15 is fixed in correspondence with support 13. The rod 14 has an intermediate upward bend 16 which ends with the contact detector 17 of the feed presence. As soon as the fodder-trough comes out, the bend 16 allows detector 17 to lower down to touch the bottom of the fodder-trough thus determining a smaller angular movement of the rod 14 in presence of the residual food. The rod smaller movement is detected by the card 4, which will refill only the pre-determined quantity of feed fixed for the following meal, thus avoiding the feed overflowing from the trough. Then the card will display the said operation on the operator's control board 5. From a water tank 18, through a tap 19 and a duct 20, water reaches a drinking bowl 21 with a downflow regulated by a float 22. A float sensor 23 detects the liquid's presence in the drinking bowl and it can also detect the non-consumption of liquid within a pre-determined fixed time based on the difference between the rate of liquid flow from the float 22 and the consumption of liquid drunk by the animal. All the signals detected are displayed on control board 5. The messages which are displayed on the control board 5 can be communicated to the operator through a telephone 24 placed inside a special recess 25 and operated by a card 26 connected to the main card 4. Such telephone 24 will also be connected to another receiving apparatus which was preset by the operator on the control board 5. When the fodder-trough extends out, main card 4 activates a voice analog signal card 27 connected with a loudspeaker 28, where the operator will have pre-stored both the recall message of the animal mealtime and other alarm messages such as "meal not eaten", "end of feed", "end of water, "battery near exhaustion". By means of a receiver 29, connected with the main card 4, each single dispensed meal and the animal entitled to eat such meal can be paired to ensure that the proper animal is eating the feed. For purpose, the same animal is fitted with a special collar containing a battery operated code transmitter. In the case that the code transmitted by the collar is not recognized by the receiver 29, the fodder-trough does not come out or, if it is already out, it re-enters. The feeding of the main card 4 and of the control board 5 is alternatively operated by a battery 30, which allows an uninterrupted power supply even in case of a voltage drop at the mains. To preset the apparatus for usage, the operator sets out the operative functions needed on the control board 5 by means of a software menu shown on display 31. Such functions can include the following: a) setting the clock; b) setting out the first meal; c) setting out the following meals; d) setting out the parameter of feed quantity for each turn of the volumetric screw feeder 2; e) recording of messages on vocal synthesis 27; and f) setting the alarm telephone numbers on the card 26. These functions are selected by means of five keys: a key 32 to scroll the page display up one page, an enter key 33, a key 34 to scroll the page display down one page, an output key 35 and a reset key 36. The parameters set out in this way are transmitted on line to the main card 4, which contains other control cards specialized in vocal synthesis 27, for the receiver 29 of the collar code signal and for the telephonic connection 26. The main card 4 will activate the motor reducer 3 to operate the volumetric feeder 2, which will discharge the preset feed quantity indicated on the control board 5 into the fodder-trough 7 through an opening 6. Moreover, the MPU logic card 4 activates the motor reducer 8 located on base 9, the said motor reducer drives a belt drive 10 turning onto another idle pulley 11 integral with the fodder-trough 7 by means of a blocking plate 12. Then, the logic card 4 is set on line with an angular potentiometer 15, connected with a support 13 on a rod 14, which has an intermediate bend 16 and a contact detector 17, so to signal the quantity of feed present into the fodder-trough 7 to the said logic card 4. Moreover, the card 4 receives a signal from the level sensor 23 situated in the drinking trough 21 with a float 22 and connected with a water tank 18 through a flexible pipe 20 with a, tap 19. Action messages such as "meal not consumed", "end of feed", "end of water", "flat battery", "Rover, dinner" and so on are shown on display 31 and can be sent both to the vocal synthesis device 27 and transmitted from the loudspeaker 28, or sent to the dialling card 26 connected with a telephone set 24, situated in a special recess 25, so to get into connection with the operator's telephone receiver 37. Moreover, the logic card 4, through a code receiver 29, performs the coupling function between the served meal and the animal entitled to eat it by means of a collar 38 through a battery-operated code transmitter. An embodiment of the automatic feed distribution unit as well as the operative phases and connections thereof are illustrated schematically in the drawings of sheets 1, 2, 3, 4 and 5. In sheet 1 figure 1 is a transverse sectional view form the unit bottom to show the fodder-trough 7 and the operating members thereof. Figure 2 is a transverse sectional view of the said unit in its intermediate position to show both the feeding device operated by the motor reducer 3 and the volumetric screw conveyor 2 discharging the feed through the opening 6. Figure 3 is a top view of the said unit to show the control units such as the logic card 4 and the control board 5. In sheet 2 figure 4 is longitudinal section view of the unit to show all the devices of distribution of foods in pellet and water. In sheet 3 figure 5 is a longitudinal sectional view of the fodder-trough 7 showing both its location inside the said unit and the way to take it out. Figure 6 is a longitudinal view of the unit, staggered 90° with respect to the drawings of figure 2, to show the feed dispenser in pellet. In sheet 4 figure 7 shows a perspective view of the said unit with open side walls. In sheet 5 figure 8 shows block diagram of the functions which can be actuated by the said, as well as all the devices which put them into effect.

## Claims

1. Automatic feed distribution device for cats and dogs comprising separate compartments for allocating and for dispensing both anhydrous feed in pellets and water, whereby :
- the compartment containing the anhydrous feed in pellets consists of a reservoir (1) to which the dry feed in pellet is gravitationally fed by a volumetric screw feeder (2) activated by a D.C. motor reducer (3) which is in turn operated by a microprocessor card (4) which can actuate the operator's preset functions through a software menu on a control board (5), said compartment being provided with an opening (6) which allows the anhydrous food in pellet to fall into a fodder-trough (7) which can be extended out of the device by a translation system formed by a motor reducer (8) held and secured on a base (9) and dragged by a toothed belt drive (10) revolving on a toothed idler pulley (11) and in which said toothed belt drive is integral with the fodder-trough (7) by means of a blocking plate (12);
- sensing means, which is put in rotation by movement of the fodder-trough, senses the presence of feed instantly as well as the emptying feeding reservoir (1) and consists of a linear support (13) holding a rod (14) on which an angular potentiometer (15) is fixed in correspondence with the linear support (13), said rod (14) being provided with an intermediate upward bend (16) which ends with a contact detector (17) of the feed presence, said bend (16), as soon the the fodder-trough comes out, allowing the detector (17) to lower down to touch the bottom of the fodder-trough (7) so that the angular movement of the rod (14) will indicate the amount of feed still remaining in the fodder-trough (7), whereby said movement is detected by the microprocessor card (4) which will allow only an amount to be dispensed in the fodder-trough such that only the pre-determined quantity of feed fixed for the following meal is dispensed, avoiding the feed overflowing from the fodder-trough, and then displaying said operation on the operator's control board (5);
- the compartment containing the water consists of tank (18) with a tap (19) and a duct (20) through which water reaches a drinking bowl (21) with downflow regulated by a float (22) and a float level sensor which (23) detects the water presence into the drinking bowl and also the non-consumption of water within a pre-determined fixed time based on the difference between the rate of liquid flow from the float (22) and the consumption of liquid drunk by the animal, displaying all the detected signals on the control board (5).

2. Automatic feed distribution device for cats and dogs, as per claim 1, characterized in that a control board (5) is provided on which the messages are displayed, said messages to be communicated to the operator through a telephone (24) placed inside a special recess (25) and operated by a card (26) which is connect ed to the main card (4), such telephone (24) also to be connected to another receiving apparatus which was preset by the operator on the control board (5).

3. Automatic feed distribution device for cats and dogs, as per claim 1, characterized in that, when the fodder-trough (7) extends outs the main card (4) activates a voice analog signal card (27) connected with a loudspeaker (28) where the operator will have pre-stored both the recall message of the animal mealtime and other alarm messages.

4. Automatic feed distribution device for cats and dogs, as per claim 1, characterized in that a receiver (29) connected with the main card (4) is provided by means of which each single dispensed meal and the animal entitled to eat such meal can be paired to ensure that the proper animal is eating the feed whereby the same animal is fitted with a special collar containing a battery operated code transmitter; if the code transmitted by the collar I is not recognized by the receiver (29), the fodder-trough (7) does not come out or, if it is already out, it re-enters.

5. Automatic feed distribution device for cats and dogs, as per claim 1, characterized in that the main microprocessor card (4) and the control board (5) are alternatively operated by a battery (30) which allows an uninterrupted power supply even in case of a voltage drop at the mains.

## Revendications

1. Distributeur d'alimentation automatique pour chiens et chats comprenant des compartiments séparés pour contenir et distribuer aussi bien un aliment anhydride en granulés que de l'eau, dans lequel:
- le compartiment contenant l'aliment anhydre en granulés est composé d'un réservoir (1) auquel l'aliment sec en granulés est amené par gravité par un alimentateur volumétrique à vis (2) activé par un moteur-réducteur (3) à courant continu qui, à son tour, est commandé par une carte à microprocesseur (4) qui peut actionner les fonctions prédéfinies par l'opérateur par l'intermédiaire d'un menu de logiciel sur un panneau de commande (5), ledit compartiment étant muni d'une ouverture (6) qui permet à l'aliment anhydre en granulés de tomber dans un auge d'alimentation (7) qui peut être mise en extension à l'extérieur de l'appareil par un système de translation formé par un moteur-réducteur (8) tenu et fixé sur une base (9), et entraîné par une transmission à courroie crantée (10) qui tourne sur une poulie folle dentée (11) et dans laquelle ladite transmission à courroie crantée est rendue solidaire de l'auge d'alimentation (7) au moyen d'une plaque de blocage (12);
- des moyens détecteurs qui sont mis en rotation per le mouvement de l'auge d'alimentation, détectent instantanément la présence d'alimentation ainsi que l'épuisement du réservoir d'alimentation (1), et sont constitués par un support linéaire (13) qui tient une tige (14) sur laquelle un potentiomètre angulaire (15) et fixé au droit du support linéaire (13), la tige (14) étant munie d'une caude intermédiaire (16) dirigé vers le haut qui se termine par un détecteur à contact (17) de la présence d'aliment, ledit coude (16), dès que l'auge d'alimentation se vide, permettant au détecteur (17) de descendre pour toucher le fond de l'auge d'alimentation (7), de sorte que le mouvement angulaire de la tige (14) indiquera la quantité d'aliment qui reste encore dans l'auge d'alimentation (7), de sorte que ledit mouvement est détecté par la carte à microprocesseur (4) qui ne permet de distribuer dans l'auge d'alimentation qu'une quantité telle que seule la quantité prédéterminée d'aliment fixée pour le repas suivant soit distribuée, en évitant que l'aliment ne déborde de l'auge d'alimentation et en affichant ensuite ladite opération sur la panneau de commande (5) de l'opérateur;
- le compartiment contenant l'eau est constitué par un réservoir d'eau (18) muni d'un robinet (19) et d'un conduit (20) par lequel l'eau atteint une cuvette d'abreuvoir (21) avec écoulement réglé par un flotteur (22) et d'un détecteur de niveau à flotteur (23) qui détecte la présence d'eau dans la cuvette d'abreuvoir et aussi la non consommation d'eau dans un temps fixe prédéterminé en se basant sur la différence entre le débit d'écoulement de liquide, donné par le flotteur (22), et la consommation de liquide bu par l'animal, en affichant tous les signaux détectés sur le panneau de commande (5).

2. Distributeur d'alimentation automatique poir chiens et chats selon la revendication 1, caractérisé en ce qu'il est prévu un panneau de commande (5) sur lequel les messages sont affichés, lesdits messages devant être communiqués à l'opérateur par l'intermédiaire d'un téléphone (24) placé dans une case spéciale (25) et actionné par une carte (26) qui est reliée à la carte principale (4), ce téléphone (24) devant aussi être connecté à un autre appareil récepteur qui est prédéfini par l'opérateur sur le panneau de commande (5).

3. Distributeur d'alimentation automatique pour chiens et chats selon la revendication 1, caractérisé en ce que lorsque l'auge d'alimentation (5) se met en extension à l'extérieur, la carte principale (4) active une carte de signal analogique vocal (27) reliée à un haut-parleur (28), où l'opérateur a préenregistré aussi bein le message de rappel- de l'heure du repas de l'animal que d'autres messages d'alarme.

4. Distributeur d'alimentation automatique pour chiens et chats selon la revendication 1, caractérisé en ce qu'il est prévu un récepteur (29) relié à la carte principale (4), au moyen duquel chaque repas distribué et l'animal autorisé à manger ce repas peuvent être couplés pour faire en sorte que ce soit l'animal désigné qui mange l'aliment, l'animal étant équipé d'un collier spécial qui contient un émetteur de code alimenté par pile; si le code émis par le collier n'est par reconnu par le récepteur (29), l'auge d'alimentation (7) ne sort pas ou, si elle est déjà sortie, elle rentre.

5. Distributeur d'alimentation automatique pour chiens et chat selon la revendication 1, caractérisé en ce que la carte principale à microprocesseur (4) et le panneau de commande (5) sont en supplément alimentés par une pile (30), ce qui permet d'assurer une alimentation électrique ininterrompue, même dans le caus d'une chute de tension de secteur.

## Patentansprüche

1. Automatischer Futterverteiler für Hunde und Katzen mit getrennten Abschnitten zur Speicherung und Abgabe von sowohl wassterfreiem Futter in Tablettenform und Wasser, wobei:
- der Abschnitt, der das wasserfrei Futter in Tablettenform enthält, aus einem Vorratsbehälter (1) besteht, an welchen das trockene Futter in Tablettenform gravitativ durch einen volumetrischen Schneckenaufgeber (2) geführt wird, der durch einen Gleichstrommotor (3) mit Untersetzungsgetriebe aktiviert wird, der wiederum durch eine Mikroprozessorkarte (4) gesteuert wird, die die mittels eines Softwaremenus auf einer Steuertafel (5) vorgegebenen Funktionen des Benutzers ausführen kann, und wobei dieser Abschnitt mit einer Oeffnung (6) versehen ist, die es dem wasserfrein Futter in Tablettenform ermöglicht, in einen Futternapf (7) zu fallen, der aus der Vorrichtung mittels eines translatorischen Systems herausgeführt werden kann, wobei dieses gebildet ist aus einem Motor mit Untersetzungsgetriebe (8), welches auf einer Basis (9) gehalten und befestigt ist, und verschiebbar ist durch einen Zahnriemenantrieb (10), der auf einer drehbaren gezahnten Führungsrolle (11) umläuft, und in dem der Zahnriemenantrieb mittels einer Verriegelungsplatte (12) integral mit dem Futternapf (7) ausgebildet ist;
- eine Sensoreinrichtung, die in Drehung versetzt wird durch die Bewegung des Futternapfes, sofort das Vorhandensein von Futter und auch den sich leerenden Vorratsbehälter (1) für Futter erfaßt und aus einer linearen Führung (13) besteht, die eine Stange (14) hält, an der ein Winkelpotentiometer (15) angebracht ist, das der linear Führung (13) zugeordent ist, welche mit einem Berührungssensor (17) für das Vorhandensein von Futter endet, wobei die Biegung (16) es dem Berührungssensor (17) ermöglicht, sobald der Futternapf herauskommt, sich abzusenken, um den Boden des Futternapfes (7) zu berühren, so daß di Winkelbewegung der Stange (14) den im Futternapf (7) noch vorhandenen Vorrat an Futter anzeigt, wobei die Bewegung durch die Mikroprozessorkarte (4) erfaßt wird, die nur eine solche in den Futtemapf abzugebende Menge zuläßt, so daß nur die vorbestimmte Menge an Futter, die für die folgende Mahlzeit festgelgt ist, abgegeben wird, wodurch ein Ueberlaufen des Futters aus dem Futtertrog vermieden wird, und sodann der genannte Vorgang an der Steuertafel (5) des Benutzers angezeigt wird;
- der Abschnitt, der das Wasser enthält, aus einem Tank (18) mit einem Leitungsventil 1 (19) und einer Rohrleitung (20) besteht, durch die das Wasser eine Trinkschale (21) erreicht, wobei der Abwärtsfluß reguliert wird durch einen Schwimmer (22) und einen schwimmenden Niveausensor (23), welcher das Vorhandensein von Wasser in der Trinkschale und ebenso den Nicht-Verbrauch von Wasser innserhalb einer vorbestimmten festen Zeit, basierend auf der Differenz zwischen dem Flüssigkeitsdurchsatz von dem Schwimmer (22) und dem Verbrauch an von dem Tier getrunkene Flüssigkeit, erfaßt, wobei alle erfaßten Signale auf der Steuertafel (5) angezeigt werden.

2. Automatischer Futterverteiler für Hunde und Katzen nach Anspruch 1, gekennzeichnet durch eine Steuertafel (5) auf der Nachrichten angezeigt werden, wobei die Nachrichten an den Benutzer geleitet werden durch ein Telefon (24), welches in einer speziellen Vertiefung (25) angebracht ist und durch eien Karte (26) betrieben wird, welche mit der Hauptkarte (4) verbunden ist, wobei das Telefon (24) ferner mit einer weiteren Empfangseinheit verbindbar ist, welche durch den Benutzer mittels der Steuertafel (5) voreingestellt ist.

3. Automatischer Futterverteiler für Hunde und Katzen nache Anspruch 1, dadurch gekennzeichnet, daß, wenn der Futternapf (7) herausbewegt ist, die Hauptkarte (4) eine Signal- bzw. Soundkarte (27) für analoge Sprache aktiviert, welche mit einem Lautsprecher (28) verbunden ist, auf der der Benutzer sowohl die Rüchrufansage der Fütterungszeit des Tieres und andere Alarmnachrichten vorabspeichern kann.

4. Automatischer Futtervertieler für Kunde und Katzen nache Anspruch 1, gekennzeichtent durch eine Empfangseinheit (29), die mit der Hauptkarte (4) verbunden ist, durch die jede einzelne abgegebene Mahlzeit und das Tier, welches berechtigt ist, diese Mahlzeit zu essen, zusammengeführt werden, um sicher zu stelle, daß das richtige Tier das Futter frißt, wobei das Tier mit einem speziellen Halsband versehen ist, welches einen batteriebetriebenen Code-Sender enthält, wird der vom Halsband übertragene Code nicht von der Empfangseinheit (29) erkannt, so fährt der Futternapf (7) nicht ous oder fährt wieder ein, wenn er bereits draußen ist.

5. Automatischer Futterverteiler für Hunde und Katzen nach Anspruch 1, dadurgh gekennzeichnet, daß die Hauptmikroprozessor karte (4) und die Steuertafel (5) alternativ durch eine Batterie (30) betriben werden, wodurch eine ununterbrochene Stromversorgung ermöglicht ist, selbst im Falle eines Stromausfalls bzw. Spannungsabfalls im Netz.
